# EUROPÄISCHE PATENTSCHRIFT

(11) **EP 3 256 365 B1**
(45) Veröffentlichungstag und Bekanntmachung des Hinweises auf die Patenterteilung: **24.07.2019**
(21) Anmeldenummer: 16701455.4
(22) Anmeldetag: 22.01.2016
(51) Int. Cl.: B62D 15/02

(54) **VERFAHREN ZUM BETREIBEN EINES FAHRZEUGS**
METHOD TO OPERATE A VEHICLE
PROCÉDÉ POUR OPÉRERUN VÉHICULE EN

(30) Priorität: 12.02.2015 DE 102015202482
(43) Veröffentlichungstag der Anmeldung: 20.12.2017
(73) Patentinhaber: Robert Bosch GmbH, 70442 Stuttgart (DE)
(72) Erfinder: MATHONY, Hans-Joerg, 71732 Tamm-Hohenstange (DE); NORDBRUCH, Stefan, 70806 Kornwestheim (DE); NICODEMUS, Rolf, 74321 Bietigheim-Bissingen (DE); HOFFMANN, Stefan, 74321 Bietigheim (DE); MIELENZ, Holger, 73760 Ostfildern (DE)
(86) Internationale Anmeldenummer: PCT/EP2016/051332
(87) Internationale Veröffentlichungsnummer: WO 2016/128203

(56) Entgegenhaltungen:
- WO-A1-2011/154242
- DE-A1-102008 027 692
- DE-A1-102012 008 858
- DE-A1-102013 015 349

## Beschreibung

Die Erfindung betrifft ein Verfahren zum Betreiben eines Fahrzeugs sowie ein Fahrzeug und ein Computerprogramm.

### Stand der Technik

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Die Offenlegungsschrift DE 10 2012 222 562 A1 zeigt ein System für bewirtschaftete Parkflächen zur Überführung eines Fahrzeugs von einer Startposition in eine Zielposition. Das System umfasst eine ortsfest angeordnete zentrale Recheneinheit zur Berechnung einer Bewegungsbahn, entlang derer sich das Fahrzeug mit einer Fahrzeuggeschwindigkeit autonom von der Startposition in die Zielposition bewegt und eine Übertragungseinrichtung zur Übertragung der Bewegungsbahn an das Fahrzeug.

Das heißt also, dass in dem bekannten System das Fahrzeug mittels der fahrzeugexternen Recheneinheit bei seiner Bewegung von der Startposition in die Zielposition unterstützt wird.

Ein solches System ist in der Regel sehr kostenintensiv und/oder (teilweise) schwierig in bestehende bewirtschaftete Parkflächen nachträglich einzubauen.

Die Offenlegungsschrift DE 10 2008 027 692 A1 zeigt ein Verfahren zur Unterstützung eines Fahrers eines Fahrzeugs bei einem Parkvorgang nach dem Oberbegriff des Anspruchs 1.

Die Offenlegungsschrift WO 2011/154242 A1 zeigt ein Verfahren zum Unterstützen eines Fahrers eines Kraftfahrzeugs beim Einparken in eine Parklücke.

Die Offenlegungsschrift DE 10 2013 015 349 A1 zeigt ein Verfahren und eine Vorrichtung zum Betrieb eines Fahrzeugs.

Die Offenlegungsschrift DE 10 2012 008 858 A1 zeigt ein Verfahren zum autonomen Parken eines Kraftfahrzeugs.

### Offenbarung der Erfindung

Die der Erfindung zugrunde liegende Aufgabe kann daher darin gesehen werden, ein effizientes Konzept zum Betreiben eines Fahrzeugs bereitzustellen, welches die bekannten Nachteile überwindet.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs bereitgestellt, wobei das Fahrzeug frei von einer Unterstützung mittels einer fahrzeugexternen Verarbeitungseinrichtung autonom auf einem Parkplatz von einer Startposition zu einer Zielposition fährt.

Nach noch einem Aspekt wird ein Fahrzeug bereitgestellt, welches eingerichtet ist, das Verfahren zum Betreiben eines Fahrzeugs durchzuführen.

Gemäß einem weiteren Aspekt wird ein Computerprogramm bereitgestellt, welches Programmcode zur Durchführung des Verfahrens zum Betreiben eines Fahrzeugs umfasst, wenn das Computerprogramm auf einem Computer ausgeführt wird.

Die Erfindung umfasst also insbesondere und unter anderem den Gedanken, dass das Fahrzeug ohne eine Unterstützung mittels einer fahrzeugexternen Verarbeitungseinrichtung autonom auf einem Parkplatz von einer Startposition zu einer Zielposition fährt. Dadurch wird insbesondere der technische Vorteil bewirkt, dass das Fahrzeug auch auf einem Parkplatz autonom fahren kann, welcher nicht über ein bekanntes System gemäß der Offenlegungsschrift DE 10 2012 222 562 A1 verfügt. Bekannte Parkplätze müssen also nicht mehr kostenintensiv und technisch aufwändig nachgerüstet werden, wobei dennoch eine autonome Fahrt des Fahrzeugs auf dem Parkplatz ermöglicht ist.

Die Formulierung "frei von einer Unterstützung mittels einer fahrzeugexternen Verarbeitungseinrichtung" kann im Folgenden auch als "unterstützungsfrei" abgekürzt werden. Frei von einer Unterstützung mittels einer fahrzeugexternen Verarbeitungseinrichtung bedeutet insbesondere, dass das Fahrzeug während seiner Fahrt auf dem Parkplatz, also während der Fahrt von der Startposition zu der Zielposition, keine Daten von einer fahrzeugexternen Verarbeitungseinrichtung empfängt. Solche Daten sind zum Beispiel Objektdaten von Objekten, die sich auf dem Parkplatz befinden. Solche Daten sind zum Beispiel Trajektoriendaten einer Trajektorie, die das Fahrzeug von der Startposition zu der Zielposition abfahren soll. Solche Daten sind insbesondere Zielpositionsdaten, die den Ort oder die Position der Zielposition auf dem Parkplatz angeben. Das Fahrzeug muss also selbstständig oder alleine auf dem Parkplatz fahren.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug selbstständig, also ohne einen Eingriff eines Fahrers und/oder mittels eines ferngesteuerten Eingriffs, auf dem Parkplatz navigiert oder fährt. Das Fahrzeug fährt also selbstständig auf dem Parkplatz, ohne dass ein Fahrer hierfür das Fahrzeug steuern müsste und ohne dass eine fahrzeugexterne Fernsteuerung hierfür das Fahrzeug fernsteuern müsste. Ein Fahren umfasst insbesondere ein Regeln und/oder ein Steuern einer Quer- und/oder einer Längsführung des Fahrzeugs. Ein solch autonom fahrendes Fahrzeug, das automatisch ein- und ausparken kann, wird beispielsweise als ein AVP-Fahrzeug bezeichnet. AVP steht für "Automatic Valet Parking" und kann mit "automatischer Parkvorgang" übersetzt werden. Fahrzeuge, die diese AVP-Funktionalität nicht aufweisen, werden beispielsweise als normale Fahrzeuge bezeichnet.

Nach einer Ausführungsform ist vorgesehen, dass das Fahrzeug frei von der Unterstützung mittels der fahrzeugexternen Verarbeitungseinrichtung eine geeignete freie Parkposition als Zielposition sucht und frei von der Unterstützung mittels der fahrzeugexternen Verarbeitungseinrichtung in die freie Parkposition einparkt. Dadurch wird insbesondere der technische Vorteil bewirkt, dass das Fahrzeug auch auf Parkplätzen einen autonomen Parkvorgang durchführen kann, die kein bekanntes System für bewirtschaftete Parkflächen gemäß der Offenlegungsschrift DE 10 2012 222 562 A1 aufweisen.

Nach der Erfindung ist vorgesehen, dass das Fahrzeug ausschließlich bezogen auf eine Fahrtrichtung links bei Linksverkehr oder ausschließlich bezogen auf eine Fahrtrichtung rechts bei Rechtsverkehr nach der Parkposition sucht. Dadurch wird insbesondere der technische Vorteil bewirkt, dass eine Suche effizient durchgeführt werden kann, insofern nur ein begrenzter Bereich vom Fahrzeug bezogen auf die Fahrtrichtung abgesucht werden muss. Insbesondere kann dadurch in vorteilhafter Weise vermieden werden, dass das Fahrzeug eine Parkposition findet, für die es einen Gegenverkehr durchqueren müsste, um zu dieser Parkposition zu gelangen. Denn wenn sich die Parkposition bei einem Rechtsverkehr in Fahrtrichtung rechts befindet, so muss das Fahrzeug nicht nach links abbiegen und hierbei einen eventuellen Gegenverkehr kreuzen. Entsprechend gilt dies für einen Linksverkehr. Dadurch kann in vorteilhafter Weise eine Kollision zwischen dem Fahrzeug und diesem Fahrzeug entgegenkommenden Fahrzeugen vermieden werden.

In einer anderen Ausführungsform ist vorgesehen, dass das Suchen umfasst, dass ein Signalgeber an einer möglichen Parkposition detektiert und ein vom Signalgeber ausgesandtes Signal dahingehend ausgewertet wird, ob das Signal ein Frei- oder ein Belegtsignal ist, so dass die mögliche Parkposition entsprechend der Auswertung als frei oder als belegt klassifiziert wird. Dadurch wird insbesondere der technische Vorteil bewirkt, dass eine effiziente Suche nach einer geeigneten Parkposition ermöglicht ist, insofern das Signal des Signalgebers bereits vorgibt, ob die Parkposition frei oder belegt ist. Somit muss zum Beispiel nicht mehr eine mögliche Parkposition aufwändig mittels einer Umfeldsensorik erfasst werden, um festzustellen, ob diese belegt oder frei ist. Nach einer anderen Ausführungsform ist vorgesehen, dass das Suchen umfasst, das ein Zeichen an einer möglichen Parkposition detektiert und dahingehend analysiert wird, ob sich die mögliche Parkposition als Zielposition eignet oder nicht. Dadurch kann beispielsweise der technische Vorteil bewirkt werden, dass eine Suche nach einer geeigneten Parkposition vereinfacht werden kann. Insbesondere kann dadurch vermieden werden, dass eine mögliche Parkposition als Zielposition klassifiziert wird, obwohl diese mögliche Parkposition nicht zulässig für das Fahrzeug ist. Denn so könnte es sich beispielsweise um einen Behindertenparkplatz oder einen Frauenparkplatz handeln, auf welchem das Fahrzeug aber nicht parken dürfte, obwohl es dies theoretisch könnte.

In einer anderen Ausführungsform ist vorgesehen, dass das geparkte Fahrzeug frei von der Unterstützung mittels der fahrzeugexternen Verarbeitungseinrichtung aus der Parkposition ausparkt, frei von der Unterstützung mittels der fahrzeugexternen Verarbeitungseinrichtung von der Parkposition zurück zur Startposition oder frei von der Unterstützung mittels der fahrzeugexternen Verarbeitungseinrichtung zu einer weiteren Zielposition autonom fährt und sich dort frei von der Unterstützung mittels der fahrzeugexternen Verarbeitungseinrichtung autonom abstellt. Dadurch wird insbesondere der technische Vorteil bewirkt, dass keine fahrzeugexterne Verarbeitungseinrichtung für ein Ausparken und eine anschließende autonome Weiterfahrt des Fahrzeugs benötigt wird. Die weitere Zielposition kann beispielsweise eine weitere Parkposition sein, an welcher das Fahrzeug autonom unterstützungsfrei einparken wird. Dies ist insbesondere dann sinnvoll, wenn das Fahrzeug nach einem Parken in der ersten Parkposition feststellt, dass es eine weitere Parkposition gibt, die näher an der Startposition liegt, sodass dann eine Rückfahrt von der weiteren Zielposition zu der Startposition kürzer wäre. Denn in diesem Fall ist eine entsprechende Rückfahrt kürzer, sodass ein Fahrer des Fahrzeugs an der Startposition nicht lange auf sein Fahrzeug warten muss.

Die weitere Zielposition ist nach einer Ausführungsform eine Beladeposition, an welcher das Fahrzeug beladen wird.

Nach einer weiteren Ausführungsform ist die weitere Zielposition eine Servicestation, an welcher eine Dienstleistung am Fahrzeug durchgeführt wird. Zum Beispiel kann das Fahrzeug an der Servicestation gewaschen, inspiziert, gewartet oder repariert werden.

Nach einer Ausführungsform fährt das Fahrzeug von der weiteren Zielposition zurück zu der ersten Zielposition, also insbesondere zu der Parkposition, zurück, um von dort insbesondere zurück zur Startposition zu fahren. Dies alles unterstützungsfrei und autonom.

Nach einer Ausführungsform ist vorgesehen, dass das Fahrzeug frei von der Unterstützung mittels der fahrzeugexternen Verarbeitungseinrichtung autonom von der entsprechenden Zielposition zurück zur Startposition basierend auf einer während der Hinfahrt von der Startposition zu der entsprechenden Zielposition abgefahrenen Trajektorie fährt. Dadurch wird insbesondere der technische Vorteil bewirkt, dass eine effiziente Rückfahrt des Fahrzeugs durchgeführt werden kann. Denn so kann das Fahrzeug zumindest Teile des gleichen Weges zurückfahren.

Gemäß einer weiteren Ausführungsform ist vorgesehen, dass das Fahrzeug frei von der Unterstützung mittels der fahrzeugexternen Verarbeitungseinrichtung überprüft, ob ein oder mehrere Umwege auf der Hinfahrt gefahren wurden, und, wenn ja, zumindest einen der Umwege, vorzugsweise alle Umwege, aus der Trajektorie herausrechnet, um eine herausgerechnete Trajektorie zu berechnen, so dass die Fahrt zurück zur Startposition basierend auf der herausgerechneten Trajektorie durchgeführt wird.

Dadurch wird insbesondere der technische Vorteil bewirkt, dass eine Rückfahrt besonders effizient durchgeführt werden kann, insofern ein schnellerer Rückweg gegeben ist bezogen auf den Hinweg. Denn auf dem Rückweg werden die Umwege nicht mehr gefahren.

Nach einer Ausführungsform ist vorgesehen, dass das Fahrzeug der autonomen Fahrt entsprechende Daten über ein Kommunikationsnetzwerk an ein Endgerät sendet. Das Endgerät ist zum Beispiel ein mobiles Endgerät, zum Beispiel ein Mobiltelefon, zum Beispiel ein Smartphone. Zum Beispiel handelt es sich bei dem Endgerät um ein Endgerät des Fahrers des Fahrzeugs. Die Daten umfassen zum Beispiel Positionsdaten des Fahrzeugs. Die Daten umfassen zum Beispiel Fahrdaten, insbesondere Trajektoriendaten, beschreiben also eine Trajektorie, die das Fahrzeug bereits gefahren ist und/oder die das Fahrzeug noch fahren wird. Daten umfassen insbesondere Sensordaten von einem oder mehreren Umfeldsensoren einer Umfeldsensorik des Fahrzeugs. Die Umfeldsensorik umfasst also beispielsweise einen oder mehrere Umfeldsensoren. Ein Umfeldsensor ist beispielsweise: ein Lidarsensor, ein Ultraschallsensor, ein Lasersensor, ein Videosensor, ein Radarsensor. Dadurch kann zum Beispiel ein Fahrer online verfolgen, wie und/oder wo sein Fahrzeug auf dem Parkplatz fährt.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs und
- Fig. 2: ein Fahrzeug.

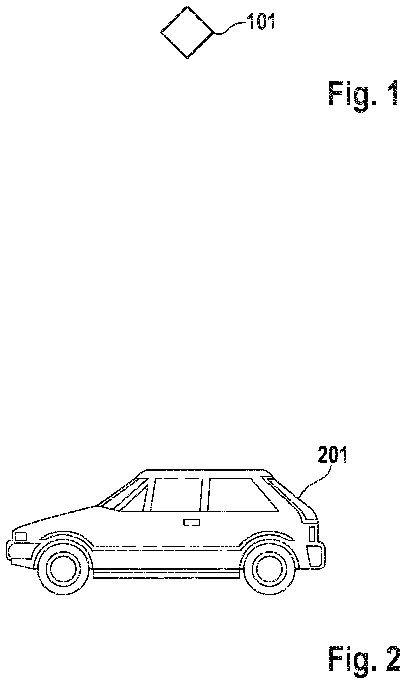

Fig. 1 zeigt ein Ablaufdiagramm eines Verfahrens zum Betreiben eines Fahrzeugs.

Es ist gemäß einem Schritt 101 vorgesehen, dass das Fahrzeug frei von einer Unterstützung mittels einer fahrzeugexternen Verarbeitungseinrichtung autonom auf einem Parkplatz von einer Startposition zu einer Zielposition fährt.

Nach einer Ausführungsform ist die Startposition eine Abgabeposition, an welcher das Fahrzeug von seinem Fahrer abgestellt werden kann, damit das Fahrzeug anschließend einen autonomen Parkvorgang durchführen kann.

Nach einer Ausführungsform ist die Zielposition eine Parkposition, an welcher das Fahrzeug einparken wird.

Nach einer anderen Ausführungsform ist vorgesehen, dass die Startposition eine Parkposition ist und die Zielposition eine Abholposition, an welcher ein Fahrer sein Fahrzeug nach einem Ende eines autonomen Parkvorgangs abholen kann.

Nach einer Ausführungsform sind die Abgabeposition und die Abholposition verschieden.

Nach einer weiteren Ausführungsform sind die Abholposition und die Abgabeposition identisch.

Nach einer Ausführungsform ist vorgesehen, dass das Fahrzeug unterstützungsfrei von der Startposition zu einer Zielposition und von dort zu einer weiteren Zielposition oder zurück zu der Startposition fährt. Die weitere Zielposition ist insbesondere eine Abholposition.

Nach einer Ausführungsform ist vorgesehen, dass das Fahrzeug unterstützungsfrei von der Startposition zu einer Parkposition autonom fährt, dort unterstützungsfrei autonom einparkt, zeitlich später unterstützungsfrei autonom ausparkt und unterstützungsfrei zurück zur Startposition autonom fährt.

Nach einer Ausführungsform ist vorgesehen, dass das Fahrzeug basierend auf einer digitalen Karte des Parkplatzes unterstützungsfrei autonom auf dem Parkplatz fährt.

Nach einer Ausführungsform ist vorgesehen, dass das Fahrzeug frei von einer digitalen Karte des Parkplatzes unterstützungsfrei autonom auf dem Parkplatz fährt. Das heißt also, dass das Fahrzeug ohne eine digitale Karte auf dem Parkplatz unterstützungsfrei autonom fährt.

Fig. 2 zeigt ein Fahrzeug 201, welches eingerichtet ist, das Verfahren zum Betreiben eines Fahrzeugs durchzuführen.

Nach einer Ausführungsform umfasst das Fahrzeug 201 eine Umfeldsensorik zum Erfassen eines Umfelds des Fahrzeugs. Die Umfeldsensorik umfasst beispielsweise einen oder mehrere Umfeldsensoren. Ein Umfeldsensor ist beispielsweise: ein Lidarsensor, ein Ultraschallsensor, ein Lasersensor, ein Videosensor, ein Radarsensor.

Nach einer Ausführungsform umfasst das Fahrzeug 201 eine Steuerungseinrichtung, die ausgebildet ist, das Fahrzeug autonom zu steuern. Nach einer Ausführungsform umfasst das Fahrzeug 201 eine fahrzeuginterne Verarbeitungseinrichtung. Die fahrzeuginterne Verarbeitungseinrichtung verarbeitet beispielsweise Umfelddaten der Umfeldsensorik und ermittelt beispielsweise basierend auf den Umfelddaten eine Solltrajektorie, die das Fahrzeug mittels der Steuerungseinrichtung abfahren soll. Das heißt also, dass die Steuerungseinrichtung das Fahrzeug basierend auf der ermittelten Solltrajektorie autonom führt respektive führen kann.

Die Erfindung umfasst also insbesondere und unter anderem den Gedanken, ein technisches Konzept bereitzustellen, basierend auf welchem das Fahrzeug ohne eine Unterstützung einer fahrzeugexternen Verarbeitungseinrichtung autonom auf einem Parkplatz fahren kann. Das heißt also insbesondere, dass erfindungsgemäß vorgesehen ist, dass sämtliche Aufgaben, die für einen autonomen Parkvorgang erforderlich sind, von dem Fahrzeug vollständig, allein und autonom durchgeführt werden.

Das heißt also insbesondere, dass das Fahrzeug, welches auch als ein AVP-Fahrzeug bezeichnet werden kann, insbesondere folgende Aufgaben selbstständig, also autonom, also ohne eine Unterstützung einer fahrzeugexternen Verarbeitungseinrichtung durchführen kann, was nach entsprechenden Ausführungsformen auch so vorgesehen ist:
Ein autonomes Fahren von einer Abgabeposition zu einer Parkposition.

Ein autonomes Fahren von der Parkposition zurück zu der Abgabeposition.

Die Identifikation einer freien Parkposition innerhalb des Parkplatzes oder des Parkhauses.

Die Analyse der Parkposition bezüglich notwendiger Abmaße (Breite, Länge, Höhe) für das Fahrzeug.

Die Analyse der Parkposition bezüglich möglicher Einschränkungen (zum Beispiel Frauenparkposition, Behindertenparkposition, Familienparkposition, Fahrzeugladeposition für Elektrofahrzeuge), also ob das Fahrzeug an der Parkposition überhaupt parken darf.

Autonomes Ein- und Ausparken in die Parkposition respektive aus der Parkposition.

Detektion von Objekten und entsprechende Reaktion, zum Beispiel ein Stoppen, ein Ausweichen, auf die detektierten Objekte. Eine Detektion umfasst insbesondere eine sensorische Erfassung eines Fahrzeugumfelds mittels der Umfeldsensorik.

Ein Befolgen von Regeln und/oder Vorschriften, insbesondere bezüglich Geschwindigkeiten, Anhalten oder Stoppen bei Ampeln (Signalgebern), Schranken.

Nach einer Ausführungsform ist vorgesehen, dass ein Bezahlvorgang elektronisch mit einem Parkplatz -oder Parkhausverwaltungssystem durchgeführt wird.

Nach einer Ausführungsform ist vorgesehen, dass das Fahrzeug durch eine Schranke, eine sogenannte Bezahlschranke, mittels einer Ticketabgabe fährt, wobei das Ticket im Vorfeld beispielsweise manuell bezahlt worden ist. Dies wird vorzugsweise nach einem Erreichen der Abgabeposition durch einen Fahrer des Fahrzeugs manuell durchgeführt.

Nach einer Ausführungsform ist vorgesehen, dass dem Fahrzeug vor einer Ankunft an der Startposition eine digitale Karte des Parkplatzes oder des Parkhauses zur Verfügung gestellt bekommt. Beispielsweise kann ein Kartendienst diese digitale Karte dem Fahrzeug im Vorfeld zur Verfügung stellen.

Das Fahrzeug, insbesondere das AVP-Fahrzeug, fährt nach einer Ausführungsform auf Basis der digitalen Karte von der Abgabeposition, die auch als eine Dropping Zone bezeichnet werden kann, los und sucht im Vorbeifahren, also während der Fahrt auf dem Parkplatz, eine freie Parkposition, die geeignet ist, damit das Fahrzeug an dieser Parkposition einparken kann. Das Suchen umfasst insbesondere ein Ausmessen der Parkposition. Das heißt also insbesondere, dass erfindungsgemäß vorgesehen ist, dass im Vorfeld keine Parkposition auf dem Parkplatz reserviert und dem Fahrzeug eine entsprechende Parkposition im Vorfeld mitgeteilt wird.

Sofern nach einer Ausführungsform die Parkpositionen auf dem Parkplatz mit Signalgebern versehen sind, die einen Belegungszustand (frei oder belegt) mittels entsprechender Signale anzeigen können (zum Beispiel rotes Signallicht bei einer belegten Parkposition und grünes Signallicht bei einer freien Parkposition), so ist nach einer Ausführungsform vorgesehen, dass die ausgesendeten Signale mittels der Umfeldsensorik detektiert und ausgewertet werden, dies insbesondere mittels entsprechender Algorithmen. Das heißt also insbesondere, dass beispielsweise die Lichter von Lichtsignalgebern mit einer oder mehreren Videokameras und Algorithmen erkannt und ausgewertet werden können. Zum Beispiel sind solche Signalgeber an einer Decke in einem Parkhaus angeordnet.

Nach einer Ausführungsform ist vorgesehen, dass beispielsweise Schilder, zum Beispiel Frauenparkpositionsschild, Behindertenparkpositionsschild, detektiert werden, die mittels entsprechender Verkehrsschilderkennungsalgorithmen ausgewertet werden, um mögliche Beschränkungen hinsichtlich eines Parkens auf der Parkposition erkennen zu können.

Nach einer weiteren Ausführungsform wird für eine Vereinfachung nur nach einer geeigneten Parkposition auf der rechten Seite bezogen auf die Fahrtrichtung bei einem Rechtsverkehr oder auf der linken Seite bezogen auf eine Fahrtrichtung bei Linksverkehr gesucht. Denn dadurch muss in vorteilhafter Weise kein Gegenverkehr bei der autonomen Fahrt des Fahrzeugs berücksichtigt werden.

Nach einer Ausführungsform ist vorgesehen, dass die Fahrt, insbesondere die AVP-Fahrt, also der AVP-Vorgang, ohne eine digitale Karte des Parkplatzes durchgeführt wird. Das heißt also insbesondere, dass das Fahrzeug nach einer Ausführungsform auf der Abgabestelle oder Dropping Zone oder Abgabeposition in Fahrtrichtung zum Parkplatz abgestellt wird. Danach ist nach einer Ausführungsform vorgesehen, dass das Fahrzeug autonom losfährt und sich dann an beispielsweise Fahrbahnmarkierungen und beispielsweise Hinweisschildern orientiert, um auf dem Parkplatz autonom zu fahren oder zu navigieren. Gleiches gilt für einen Rückweg von einer Parkposition zu der Abgabeposition.

Andere Fahrzeuge und Objekte detektiert das Fahrzeug nach einer Ausführungsform. Als Folge eines detektierten Objekts ist nach einer Ausführungsform vorgesehen, dass das Fahrzeug autonom anhält oder stoppt, wenn notwendig, oder dass es einen Ausweichkurs um die Fahrzeuge und/oder die Objekte berechnet und unterstützungsfrei selbstständig abfährt.

Nach einer Ausführungsform parkt das Fahrzeug autonom unterstützungsfrei in die Parkposition ein respektive aus dieser aus.

Die Formulierung "respektive" umfasst insbesondere die Formulierung "und/oder".

Nach einer Ausführungsform speichert sich das Fahrzeug seinen Hinweg von der Startposition zu der Zielposition. Dies insbesondere derart, dass es gegebenenfalls durchgeführte Umwege (zum Beispiel zum Ausweichen von Objekten und/oder Fahrzeugen) und/oder durch Schleifenfahren beim Suchen einer Parkposition) herausrechnet. Das heißt, dass dadurch der technische Vorteil eine Effizienz erreicht wird, das heißt also ein schnellerer Rückweg. Das heißt also, dass das Fahrzeug einen Hinweg dahingehend bearbeitet, dass die Umwege herausgerechnet werden. Den entsprechenden bearbeiteten Hinweg speichert sich das Fahrzeug elektronisch.

Nach einer Ausführungsform orientiert sich das Fahrzeug bei seiner autonomen Fahrt an Fahrbahnmarkierungen und/oder an Hinweisschildern. Sofern eine digitale Karte vorgesehen ist, wird die Orientierung insbesondere alternativ oder anstelle zu der Orientierung an Fahrbahnmarkierungen und Hinweisschildern basierend auf der digitalen Karte durchgeführt.

Nach einer Ausführungsform ist der Parkplatz oder das Parkhaus ein für autonome Fahrzeuge exklusiver Parkplatz oder ein für autonome Fahrzeuge exklusives Parkhaus. Solche Parkplätze respektive Parkhäuser können zum Beispiel als AVP-Parkplätze oder AVP-Parkhäuser bezeichnet werden. Ein solches exklusives AVP-Parkhaus oder ein solch exklusiver AVP-Parkplatz bezeichnet insbesondere einen Parkplatz respektive ein Parkhaus, welcher respektive welches ausschließlich für AVP-Fahrzeuge reserviert ist. Dies bedeutet insbesondere eine Vereinfachung bei der Erkennung auf Einschränkungen von Parkpositionen (zum Beispiel Behindertenparkposition und/oder Frauenparkposition).

Nach einer weiteren Ausführungsform werden Infrastrukturelemente des Parkplatzes zur Orientierung verwendet. Zum Beispiel können ein WLAN- und/oder Landmarken zur Orientierung und/oder Lokalisierung durch das Fahrzeug verwendet werden.

Nach einer Ausführungsform ist vorgesehen, dass ein Fahrer über sein Endgerät, insbesondere sein mobiles Endgerät, zum Beispiel ein Mobiltelefon, zum Beispiel ein Smartphone, einige oder alle Vorgänge, zum Beispiel das autonome Fahren) online verfolgt. Das heißt also, dass nach einer Ausführungsform das Fahrzeug entsprechende Daten über ein Kommunikationsnetzwerk an das Endgerät des Fahrers überträgt. Hierfür umfasst das Fahrzeug zum Beispiel eine Kommunikationsschnittstelle.

Nach einer Ausführungsform umfasst das Kommunikationsnetzwerk ein Mobilfunknetzwerk und/oder ein WLAN-Netzwerk.

Nach einer Ausführungsform wird respektive ist eine Kommunikation über das Kommunikationsnetzwerk verschlüsselt.

## Patentansprüche

1. Verfahren zum Betreiben eines Fahrzeugs (201), wobei das Fahrzeug (201) frei von einer Unterstützung mittels einer fahrzeugexternen Verarbeitungseinrichtung autonom auf einem Parkplatz von einer Startposition zu einer Zielposition fährt (101),
wobei das Fahrzeug (201) frei von der Unterstützung mittels der fahrzeugexternen Verarbeitungseinrichtung eine geeignete freie Parkposition als Zielposition sucht und frei von der Unterstützung mittels der fahrzeugexternen Verarbeitungseinrichtung in die freie Parkposition einparkt, **dadurch gekennzeichnet, dass** das Fahrzeug (201) ausschließlich bezogen auf eine Fahrtrichtung links bei Linksverkehr oder ausschließlich bezogen auf eine Fahrtrichtung rechts bei Rechtsverkehr nach der Parkposition sucht.

2. Verfahren nach Anspruch 1, wobei das Suchen umfasst, dass ein Signalgeber an einer möglichen Parkposition detektiert und ein vom Signalgeber ausgesandtes Signal dahingehend ausgewertet wird, ob das Signal ein Frei- oder ein Belegtsignal ist, so dass die mögliche Parkposition entsprechend der Auswertung als frei oder als belegt klassifiziert wird.

3. Verfahren nach einem der vorherigen Ansprüche, wobei das Suchen umfasst, das ein Zeichen an einer möglichen Parkposition detektiert und dahingehend analysiert wird, ob sich die mögliche Parkposition als Zielposition eignet oder nicht.

4. Verfahren nach einem der vorherigen Ansprüche, wobei das geparkte Fahrzeug (201) frei von der Unterstützung mittels der fahrzeugexternen Verarbeitungseinrichtung aus der Parkposition ausparkt, frei von der Unterstützung mittels der fahrzeugexternen Verarbeitungseinrichtung von der Parkposition zurück zur Startposition oder frei von der Unterstützung mittels der fahrzeugexternen Verarbeitungseinrichtung zu einer weiteren Zielposition autonom fährt und sich dort frei von der Unterstützung mittels der fahrzeugexternen Verarbeitungseinrichtung autonom abstellt.

5. Verfahren nach einem der vorherigen Ansprüche, wobei das Fahrzeug (201) frei von der Unterstützung mittels der fahrzeugexternen Verarbeitungseinrichtung autonom von der entsprechenden Zielposition zurück zur Startposition basierend auf einer während der Hinfahrt von der Startposition zu der entsprechenden Zielposition abgefahrenen Trajektorie fährt.

6. Verfahren nach Anspruch 5, wobei das Fahrzeug frei von der Unterstützung mittels der fahrzeugexternen Verarbeitungseinrichtung überprüft, ob ein oder mehrere Umwege auf der Hinfahrt gefahren wurden, und, wenn ja, zumindest einen der Umwege aus der Trajektorie herausrechnet, um eine herausgerechnete Trajektorie zu berechnen, so dass die Fahrt zurück zur Startposition basierend auf der herausgerechneten Trajektorie durchgeführt wird.

7. Verfahren nach einem der vorherigen Ansprüche, wobei der Parkplatz ein für autonome Fahrzeuge exklusiver Parkplatz ist.

8. Verfahren nach einem der vorherigen Ansprüche, wobei das Fahrzeug der autonomen Fahrt entsprechende Daten über ein Kommunikationsnetzwerk an ein Endgerät sendet.

9. Verfahren nach einem der vorherigen Ansprüche, wobei das Fahrzeug basierend auf einer digitalen Karte des Parkplatzes frei von der Unterstützung mittels der fahrzeugexternen Verarbeitungseinrichtung autonom auf dem Parkplatz fährt.

10. Verfahren nach einem der Ansprüche 1 bis 8, wobei das Fahrzeug frei von einer digitalen Karte des Parkplatzes frei von der Unterstützung mittels der fahrzeugexternen Verarbeitungseinrichtung autonom auf dem Parkplatz fährt.

11. Fahrzeug (201), welches eingerichtet ist, das Verfahren nach einem der vorherigen Ansprüche durchzuführen.

12. Computerprogramm, umfassend Programmcode zur Durchführung des Verfahrens nach einem der Ansprüche 1 bis 10, wenn das Computerprogramm auf einem Computer ausgeführt wird.

## Claims

1. Method for operating a vehicle (201), wherein the vehicle (201) drives autonomously, without assistance by means of a vehicle-external processing device, from a starting position to a target position in a carpark, wherein the vehicle (201) searches for a suitable free parking position as target position without assistance by means of the vehicle-external processing device, and parks in the free parking position without assistance by means of the vehicle-external processing device,
**characterized in that**
the vehicle (201) searches for the parking position exclusively on the left with respect to a travel direction in the case of left-hand traffic or exclusively on the right with respect to a travel direction in the case of right-hand traffic.

2. Method according to Claim 1, wherein the searching comprises a signal generator detecting at a possible parking position and a signal which is emitted by the signal generator being evaluated to the effect that the signal is a free signal or an occupied signal, so that the possible parking position is classified as free or as occupied in accordance with the evaluation.

3. Method according to one of the preceding claims, wherein the searching comprises that a sign is detected at a possible parking position and is analysed to determine whether the possible parking position is suitable as a target position or not.

4. Method according to one of the preceding claims, wherein the parked vehicle (201) exits the parking position without assistance by means of the vehicle-external processing device, drives autonomously, without assistance by means of the vehicle-external processing device, from the parking position back to the starting position, or drives autonomously, without assistance by means of the vehicle-external processing device, to a further target position and parks autonomously there without assistance by means of the vehicle-external processing device.

5. Method according to one of the preceding claims, wherein the vehicle (201) drives autonomously, without assistance by means of the vehicle-external processing device, from the corresponding target position back to the starting position on the basis of a trajectory which is travelled along during the outward journey from the starting position to the corresponding target position.

6. Method according to Claim 5, wherein the vehicle checks, without assistance by means of the vehicle-external processing device, whether one or more detours have been driven along on the outward journey and if this is the case at least one of the detours is extracted from the trajectory, in order to calculate an extracted trajectory, so that the journey back to the starting position is carried out on the basis of the extracted trajectory.

7. Method according to one of the preceding claims, wherein the carpark is a carpark which is exclusively for autonomous vehicles.

8. Method according to one of the preceding claims, wherein the vehicle transmits data corresponding to the autonomous journey to a terminal via a communication network.

9. Method according to one of the preceding claims, wherein the vehicle drives autonomously, free from assistance by means of the vehicle-external processing device, on the carpark on the basis of a digital map of the carpark.

10. Method according to one of Claims 1 to 8, wherein the vehicle drives autonomously, without assistance by means of the vehicle-external processing device, on the carpark and without a digital map of the carpark.

11. Vehicle (201) which is configured to carry out the method according to one of the preceding claims.

12. Computer program comprising program code for carrying out the method according to one of Claims 1 to 10 when the computer program is executed on a computer.

## Revendications

1. Procédé permettant de faire fonctionner un véhicule (201), dans lequel le véhicule (201) se déplace de manière autonome (101) sur un parc de stationnement, sans assistance, d'une position de départ à une position cible, au moyen d'un dispositif de traitement externe au véhicule,
dans lequel le véhicule (201) recherche une position de stationnement libre appropriée en tant que position cible, sans l'assistance, au moyen du dispositif de traitement externe au véhicule et se gare dans la position de stationnement libre, sans l'assistance, au moyen du dispositif de traitement externe au véhicule, **caractérisé en ce que** le véhicule (201) recherche la position de stationnement exclusivement par rapport à une direction de déplacement orientée vers la gauche en cas de circulation à gauche ou exclusivement par rapport à une direction de déplacement orientée vers la droite en cas de circulation à droite.

2. Procédé selon la revendication 1, dans lequel la recherche comprend la détection d'un émetteur de signaux à une position de stationnement possible et l'évaluation d'un signal émis par l'émetteur de signaux pour déterminer si le signal est un signal libre ou un signal occupé, de manière à ce que la position de stationnement possible soit classée comme étant libre ou comme étant occupée selon l'évaluation.

3. Procédé selon l'une des revendications précédentes, dans lequel la recherche comprend la détection d'un panneau de signalisation à une position de stationnement possible et une analyse pour déterminer si la position de stationnement possible est ou non appropriée en tant que position cible.

4. Procédé selon l'une des revendications précédentes, dans lequel le véhicule stationné (201) quitte la position de stationnement, sans l'assistance, au moyen du dispositif de traitement externe au véhicule, retourne de manière autonome de la position de stationnement à la position de départ, sans l'assistance, au moyen du dispositif de traitement externe au véhicule, ou se déplace de manière autonome, sans l'assistance, au moyen du dispositif de traitement externe au véhicule vers une autre position cible et se gare à cet endroit de manière autonome, sans l'assistance, au moyen du dispositif de traitement externe au véhicule.

5. Procédé selon l'une des revendications précédentes, dans lequel le véhicule (201) se déplace de manière autonome de la position cible correspondante à la position de départ, sans l'assistance, au moyen du dispositif de traitement externe au véhicule sur la base d'une trajectoire parcourue pendant le trajet aller de la position de départ à la position cible correspondante.

6. Procédé selon la revendication 5, dans lequel le véhicule est testé, sans l'assistance, au moyen du dispositif de traitement externe au véhicule pour vérifier si un ou plusieurs détours ont été parcourus au cours du trajet aller et si oui, pour calculer à partir de la trajectoire au moins l'un des détours afin de calculer une trajectoire déduite, de manière à ce que le retour vers la position de départ soit effectué sur la base de la trajectoire déduite.

7. Procédé selon l'une des revendications précédentes, dans lequel le parc de stationnement est un parc de stationnement exclusif pour véhicules autonomes.

8. Procédé selon l'une des revendications précédentes, dans lequel le véhicule envoie des données correspondant au déplacement autonome à un terminal par l'intermédiaire d'un réseau de communication.

9. Procédé selon l'une des revendications précédentes, dans lequel le véhicule se déplace de manière autonome sur le parc de stationnement sur la base d'une carte numérique du parc de stationnement, sans l'assistance, au moyen du dispositif de traitement externe au véhicule.

10. Procédé selon l'une des revendications 1 à 8, dans lequel le véhicule se déplace de manière autonome sur le parc de stationnement, sans carte numérique du parc de stationnement et sans l'assistance, au moyen du dispositif de traitement externe au véhicule.

11. Véhicule (201) qui est conçu pour mettre en oeuvre le procédé selon l'une des revendications précédentes.

12. Programme d'ordinateur comprenant un code de programme destiné à mettre en oeuvre le procédé selon l'une des revendications 1 à 10 lorsque le programme d'ordinateur est exécuté sur un ordinateur.
